(19) Europäisches Patentamt
European Patent Office
Office européen des brevets

(11) Numéro de publication : **0 034 527**
**B1**

# (12) FASCICULE DE BREVET EUROPÉEN

(45) Date de publication du fascicule du brevet : **11.04.84**

(51) Int. Cl.³ : **C 08 F220/24**, D 06 M 15/38 // (C08F220/24, 220/34, 226/06)

(21) Numéro de dépôt : **81400201.0**

(22) Date de dépôt : **10.02.81**

## (54) Copolymères fluorés, leur application au traitement hydrofuge et oléofuge de substrats divers, et substrats ainsi traités.

(30) Priorité : **19.02.80 FR 8003566**

(43) Date de publication de la demande : **26.08.81 Bulletin 81/34**

(45) Mention de la délivrance du brevet : **11.04.84 Bulletin 84/15**

(84) Etats contractants désignés : **BE CH DE FR GB IT LI NL SE**

(56) Documents cités :
**GB-A- 1 190 106**
**US-A- 4 127 711**
**US-A- 4 147 851**
**Le dossier contient des informations techniques présentées postérieurement au dépôt de la demande et ne figurant pas dans le présent fascicule.**

(73) Titulaire : **Société ATOCHEM**
**12-16, Allée des Vosges**
**F-92400 Courbevoie (FR)**

(72) Inventeur : **Dessaint, André Louis**
**17 B rue des Raques**
**Boulincourt F-60600 Clermont (FR)**

(74) Mandataire : **Rochet, Michel et al**
**ATOCHEM Service PROPRIETE INDUSTRIELLE Tour Manhattan Cedex 21**
**F-92091 Paris la Défense (FR)**

**EP 0 034 527 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Copolymères fluorés, leur application au traitement hydrofuge et oléofuge de substrats divers, et substrats ainsi traités

L'invention a pour objet de nouveaux copolymères fluorés et leur utilisation pour le revêtement et l'imprégnation de substrats divers tels que textiles, cuirs, bois, non-tissés, métaux, béton et, plus particulièrement, papiers et articles similaires pour les rendre oléophobes et hydrophobes.

Pour obtenir ces propriétés, de nombreux dérivés fluorés ont déjà été proposés. Cependant, si ces dérivés présentent de bonnes propriétés sur textiles et sur cuir, il est nécessaire pour obtenir ces mêmes propriétés sur papiers et articles similaires de les mettre en œuvre à des doses trop importantes de matière active (en l'occurrence le taux de fluor lié au carbone) pour obtenir des performances économiquement acceptables. Comme produits plus spécialement adaptés aux papiers, il a été proposé dans les brevets français 1 172 664 et 2 022 351 et dans le brevet US 3 907 576 des complexes de chrome. Ces complexes qui confèrent effectivement aux papiers et articles similaires des propriétés oléophobes intéressantes, présentent cependant l'inconvénient d'être colorés en vert et de communiquer cette couleur aux substrats sur lesquels ils sont appliqués, limitant ainsi leur emploi.

Ont été également proposés pour des utilisations papetières, des phosphates de polyfluoroalkyle ou cycloalkyle (brevets français 1 305 612, 1 317 427, 1 388 621, 2 055 551, 2 057 793 et 2 374 327, brevets US 3 083 224 et 3 817 958, brevet allemand 2 405 042) et des phosphates de polyfluoroalkyle hydroxypropyle (brevet US 3 919 361). Cependant, ces produits qui confèrent aux papiers de bonnes propriétés oléophobes ont par contre le grave défaut de ne leur conférer aucune propriété hydrophobe. De ce fait, les papiers traités avec ces produits n'offrent aucune protection vis-à-vis des produits aqueux. De plus, ces produits n'ont aucun pouvoir de collage et diminuent même fortement l'efficacité des agents de collage, gênant ainsi l'aptitude à l'écriture et à l'impression.

Ont encore été proposés pour le traitement des papiers et articles similaires, des copolymères d'esters acryliques ou méthacryliques perfluoroaliphatiques et d'esters acryliques ou méthacryliques de dialkylaminoalkyle, salifiés et N-oxydés (brevet US 4 147 851). Cependant, pour conférer de bonnes propriétés oléophobes aux papiers et articles similaires sur lesquels ils sont appliqués, ces copolymères doivent être employés à des doses élevées de matière active ; en outre, ils ne confèrent que de très faibles propriétés hydrophobes. Il en est de même des terpolymères décrits dans le brevet US 4 127 711 à base d'acrylate ou méthacrylate perfluoroaliphatique, d'acrylate ou méthacrylate polyéthoxylé non fluoré et d'acrylate ou méthacrylate de dialkylaminoéthyle.

Il a maintenant été trouvé, dans les services de la demanderesse, de nouveaux produits fluorés qui, appliqués sur papiers et articles similaires, leur confèrent à la fois, avec un faible taux de fluor déposé, un excellent taux de collage et de très bonnes propriétés hydrophobes et oléophobes, de façon telle que les papiers et articles similaires traités avec ces produits présentent un véritable « effet barrière » à l'eau et aux solvants organiques, c'est-à-dire s'opposant à la pénétration des liquides d'origine aqueuse ou huileuse, des graisses et de nombreux solvants organiques. Par ailleurs, appliqués sur d'autres substrats très divers tels que ceux cités précédemment, ces nouveaux produits leur confèrent également de très bonnes propriétés oléophobes et hydrophobes.

Les produits selon l'invention sont des copolymères, éventuellement salifiés ou quaternisés, qui comprennent en poids :

a) 35 à 98 %, de préférence 69 à 93 %, d'un ou plusieurs monomères polyfluorés de formule générale :

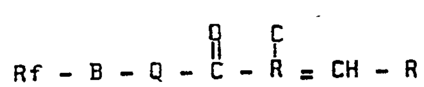

(I)

dans laquelle Rf représente un radical perfluoro-alkyle à chaîne droite ou ramifiée, contenant 2 à 20 atomes de carbone, de préférence 4 à 16 atomes de carbone, Q représente un atome d'oxygène ou de soufre, B représente un enchaînement bivalent lié à Q par un carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;

b) 1 à 15 %, de préférence 5 à 11 % et surtout 7 à 10 %, d'un ou plusieurs monomères de formule générale :

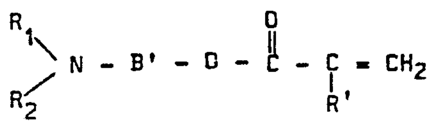

(II)

dans laquelle B' représente un radical alkylène linéaire ou ramifié, contenant 1 à 4 atomes de carbone, R' représente un atome d'hydrogène ou un radical alkyle contenant 1 à 4 atomes de carbone, $R_1$ représente un radical alkyle contenant 1 à 18 atomes de carbone, hydroxyéthyle ou benzyle, $R_2$ représente un atome d'hydrogène ou un radical alkyle contenant 1 à 18 atomes de carbone, hydroxyéthyle ou benzyle ou $R_1$ et $R_2$ ensemble avec l'atome d'azote forment un radical morpholino, pipéridino ou pyrrolidinyle-1 ;

c) 1 à 50 %, de préférence 2 à 20 %, d'un ou plusieurs monomères de formule générale :

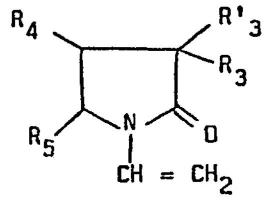

(III)

dans laquelle $R_3$, $R'_3$, $R_4$ et $R_5$ sont identiques ou différents et représentent chacun un atome d'hydrogène ou un radical alkyle contenant 1 à 4 atomes de carbone ; et éventuellement

d) jusqu'à 10 %, de préférence moins de 5 %, d'un monomère quelconque autre que les monomères de formules (I), (II) et (III).

Comme monomères polyfluorés de formule (I), on préfère ceux répondant à la formule :

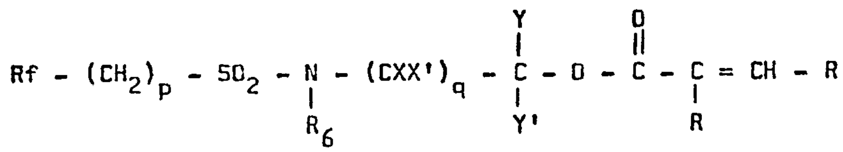

(IV)

dans laquelle Rf et R ont les mêmes significations que ci-dessus, p représente un nombre entier allant de 1 à 20, de préférence égal à 2 ou 4, q représente un nombre entier allant de 1 à 4, de préférence égal à 1 ou 2, $R_6$ représente un atome d'hydrogène ou un radical alkyle contenant 1 à 10 atomes de carbone (de préférence méthyle), cycloalkyle contenant 5 à 12 atomes de carbone, hydroxyalkyle contenant 2 à 4 atomes de carbone ou aryle éventuellement substitué par un radical alkyle contenant 1 à 6 atomes de carbone, X, X', Y et Y' sont identiques ou différents et représentent chacun un atome d'hydrogène ou un radical alkyle contenant 1 à 4 atomes de carbone. Ces monomères peuvent être préparés suivant des procédés connus, par exemple par estérification des alcools correspondants de formule :

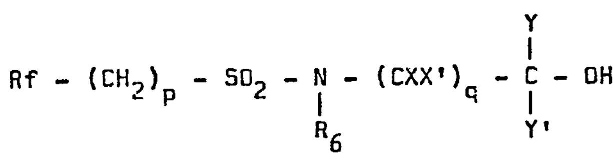

(V)

décrits dans le brevet français 2 034 142, au moyen d'un acide alcène-monocarboxylique de formule :

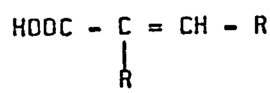

(VI)

tel que, par exemple, l'acide acrylique, l'acide méthacrylique et l'acide crotonique, en présence de catalyseurs acides comme l'acide sulfurique ou l'acide p-toluènesulfonique. Au lieu des acides alcène-monocarboxyliques de formule (VI), on peut utiliser leurs esters, anhydrides ou halogénures. Pour des raisons économiques et pratiques, il s'est avéré particulièrement intéressant d'utiliser un mélange de monomères de formule (IV) présentant des radicaux Rf différents.

Comme autres exemples de monomères polyfluorés de formule (I), on peut citer les esters des acides de formule (VI) avec les alcools et les thiols de formules :

$$Rf - (CH_2)_p - OH \qquad (VII)$$

$$Rf - (CH_2)_p - SH \qquad (VIII)$$

$$Rf - (CH_2)_p - O - (CH_2)_r - OH \qquad (IX)$$

$$Rf - (CH_2)_p - S - (CH_2)_r - OH \qquad (X)$$

$$Rf - (CH_2)_p - (OCH_2CH_2)_r - OH \qquad (XI)$$

$$Rf - (CH_2)_p - SO_2 - (CH_2)_r - OH \quad (XII)$$

$$Rf - CH = CH - (CH_2)_p - OH \quad (XIII)$$

$$Rf - SO_2 - \underset{\underset{R_7}{|}}{N} - (CH_2)_p - OH \quad (XIV)$$

$$Rf - COO - (CH_2)_p - OH \quad (XV)$$

$$Rf - CO - \underset{\underset{R_7}{|}}{N} - (CH_2)_p - OH \quad (XVI)$$

dans lesquelles Rf et p ont les mêmes significations que ci-dessus, $R_7$ représente un atome d'hydrogène ou un radical alkyle contenant 1 à 4 atomes de carbone et r est un nombre entier allant de 1 à 20, de préférence 1 à 4.

Comme exemples de monomères de formule (II), on peut citer plus particulièrement les acrylates et méthacrylates des amino-alcools suivants : diméthylamino-2 éthanol, diéthylamino-2 éthanol, dipropylamino-2 éthanol, di-isobutylamino-2 éthanol, N-tert-butyl amino-2 éthanol, N-tert-butyl N-méthylamino-2 éthanol, morpholino-2 éthanol, N-méthyl N-dodécylamino-2 éthanol, N-éthyl N-octadécylamino-2 éthanol, N-éthyl N-(éthyl-2 hexyl) amino-2 éthanol, pipéridino-2 éthanol, (pyrrolidinyl-1)-2 éthanol, diéthylamino-3 propanol-1, diéthylamino-2 propanol-1, diméthylamino-1 propanol-2, diéthylamino-4, butanol-1, diisobutylamino-4 butanol-1, diméthylamino-1 butanol-2, diéthylamino-4 butanol-2. Ces esters peuvent être préparés par exemple suivant la méthode décrite dans le brevet US 2 138 763.

Comme exemples de monomères de formule (III), on peut citer plus particulièrement la N-vinyl pyrrolidone-2, la N-vinyl méthyl-3 pyrrolidone-2, la N-vinyl méthyl-4 pyrrolidone-2, la N-vinyl méthyl-5 pyrrolidone-2 et la N-vinyl diméthyl-3,3 pyrrolidone-2, la N-vinyl pyrrolidone-2 étant préférée.

Comme autres monomères (d) pouvant également être utilisés dans le cadre de la présente invention, on peut citer :

— Les hydrocarbures oléfiniques inférieurs, halogénés ou non, tels que l'éthylène, le propylène, l'isobutène, le chloro-3 isobutène-1, le butadiène, l'isoprène, les chloro- et dichloro-butadiènes, les fluoro- et difluoro-butadiènes, le diméthyl-2,5 hexadiène-1,5, le diisobutylène ;

— Les halogénures de vinyle, d'allyle ou de vinylidène tels que le chlorure de vinyle ou de vinylidène, le fluorure de vinyle ou de vinylidène, le bromure d'allyle, le chlorure de méthallyle ;

— Le styrène et ses dérivés, tels que le vinyl-toluène, l'α-méthyl-styrène, l'α-cyanométhyl-styrène, le divinylbenzène, le N-vinyl carbazole ;

— Les esters vinyliques tels que l'acétate de vinyle, le propionate de vinyle, les esters vinyliques des acides connus sur le marché sous le nom de « Versatic acids », l'isobutyrate de vinyle, le sénécioate de vinyle, le succinate de vinyle, l'isodécanoate de vinyle, le stéarate de vinyle, le carbonate de divinyle ;

— Les esters d'allyle comme l'acétate d'allyle et l'heptanoate d'allyle ;

— Les éthers alkyl-vinyliques ou alkyl-allyliques, halogénés ou non, tels que le cétyl vinyl éther, le dodécyl vinyl éther, l'isobutyl vinyl éther, l'éthyl vinyl éther, le chloro-2 vinyl éther, le tétra allyloxy éthane ;

— Les vinyl alkyl cétones comme la vinyl méthyl cétone ;

— Les acides insaturés, tels que les acides acrylique, méthacrylique, α-chloro-acrylique, crotonique, maléique, fumarique, itaconique, citraconique et sénécioïque, leurs anhydrides et leurs esters comme les acrylates et méthacrylates de vinyle, d'allyle, de méthyle, de butyle, d'isobutyle, d'hexyle, d'heptyle, d'éthyl-2 hexyle, de cyclohexyle, de lauryle, de stéaryle ou de cellosolve, le maléate de diméthyle, le crotonate d'éthyle, le maléate acide de méthyle, l'itaconate acide de butyle, les diacrylates et diméthacrylates de glycol ou de polyalkylène glycol, comme le diméthacrylate d'éthylène glycol ou de triéthylène glycol, les acrylates et méthacrylates de dichloro-phosphato alkyle comme le méthacrylate de dichloro-phosphato éthyle, ainsi que le phosphate acide de bis (méthacryloyloxy éthyle) ;

— L'acrylonitrile, le méthacrylonitrile, le chloro-2 acrylonitrile, l'acrylate de cyano-2 éthyle, le méthylène glutaronitrile, le cyanure de vinylidène, les cyano acrylates d'alkyle comme le cyano acrylate d'isopropyle, la trisacryloyl hexahydro-s-triazine, le vinyl trichlorosilane, le vinyl triméthoxysilane, le vinyl triéthoxysilane.

Peuvent également être utilisés comme monomères (d), des composés possédant au moins une liaison éthylénique et au moins un groupe réactif, c'est-à-dire un groupe capable de réagir avec un autre monomère, un autre composé, ou le substrat lui-même pour établir une réticulation. Ces groupes réactifs sont bien connus et peuvent être des groupes polaires ou des groupes fonctionnels comme les groupes OH, $NH_2$, NH-alkyl, COOMe (Me = métal alcalin ou alcalino-terreux),

$SO_3H$, 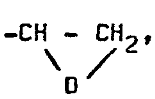, CHO, 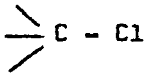, 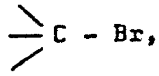, $-SO_2-CH=CH_2$,

$-NH-CO-CH=CH_2$.

Comme monomère de ce type on peut citer les acrylates et méthacrylates hydroxyalkyliques comme le monoacrylate d'éthylène glycol, le monométhacrylate de propylène glycol, les acrylates et méthacrylates de polyalkylène glycols, l'alcool allylique, l'allyl glycolate, l'isobutènediol, l'allyloxy éthanol, l'o.allyl phénol, le divinyl carbinol, le glycérol α-allyléther, l'acrylamide, la méthacrylamide, les maléamide et maléimide, la N-(cyanoéthyl)-acrylamide, la N-isopropylacrylamide, la diacétone acrylamide, les N-(hydroxy-méthyl) acrylamide et méthacrylamide, les N-(alcoxyméthyl) acrylamides et méthacrylamides, le glyoxal bis-acrylamide, l'acrylate ou méthacrylate de sodium, les acides vinyl-sulfonique et styrène-p-sulfonique et leurs sels alcalins, l'amino-3 crotononitrile, la monoallyl amine, les vinyl-pyridines, l'acrylate ou méthacrylate de glycidyle, l'allyl glycidyl éther, l'acroléine.

Les produits selon l'invention sont préparés de façon connue en soi par copolymérisation des monomères en solution dans un solvant ou dans un mélange de solvants tels que, par exemple, l'acétone, la méthyl éthyl cétone, la γ-butyrolactone, la méthyl cyclohexanone, la N-méthyl pyrrolidone-2, le méthanol, l'éthanol, l'alcool isopropylique, le butanol, l'éthylène glycol, le diacétone alcool, le phénylméthylcarbinol, l'isophorone, le tétrahydrofurane, le dioxane, l'acétate d'éthyle, l'acétate de glycol, l'éthylène ou polyéthylène glycol monométhyl ou monoalkyléther, le formamide, le diméthylformamide, l'acétonitrile, le toluène, le trifluorotoluène, le trichlorotrifluoroéthane. Préférentiellement on utilise des solvants miscibles à l'eau comme l'acétone et l'alcool isopropylique.

On opère en présence de catalyseurs de polymérisation appropriés comme, par exemple, le peroxyde de benzoyle, le peroxyde de lauroyle, le peroxyde d'acétyle, le peroxyde de succinyle, l'azo-2,2' bis-isobutyronitrile, l'azo-2,2' bis-(diméthyl-2,4 méthoxy-4 valéronitrile), l'acide azo-4,4' bis-(cyano-4 pentanoïque), l'azodicarbonamide, le perpivalate de tert-butyle. La quantité de catalyseur à mettre en œuvre peut varier entre 0,01 et 5 %, de préférence de 0,1 à 1,5 %, par rapport au poids total des monomères engagés.

On peut également opérer en utilisant une source de rayonnement U.V. en présence de photo-initiateurs tels que la benzophénone, la méthyl-2 anthraquinone ou la chloro-2 thioxanthone.

La température de réaction peut varier dans de larges limites, c'est-à-dire entre la température ambiante et le point d'ébullition du mélange de réaction. Préférentiellement on opère entre 50 et 90 °C.

Si on désire régler le poids moléculaire des copolymères, il est possible d'utiliser des agents de transfert de chaîne tels que les alkylmercaptans, comme le tertio-dodécylmercaptan, le n.dodécylmercaptan, le n.octylmercaptan, le tétrachlorure de carbone, le triphénylméthane. Les quantités à mettre en œuvre qui sont fonction des valeurs que l'on veut obtenir pour le poids moléculaire, peuvent varier de 0,01 % à 3 % par rapport au poids total des monomères et préférentiellement entre 0,05 % et 0,5 %.

La salification éventuelle du copolymère peut se faire à l'aide d'acides minéraux ou organiques forts ou moyennement forts, c'est-à-dire d'acides dont la constante de dissociation ou la première constante de dissociation est supérieure à $10^{-5}$. On peut citer, par exemple, l'acide chlorhydrique, l'acide bromhydrique, l'acide sulfurique, l'acide nitrique, l'acide phosphorique, l'acide acétique, l'acide formique, l'acide propionique. Préférentiellement on utilise l'acide acétique.

Au lieu de convertir le copolymère en sel, on peut le quaterniser à l'aide d'un agent quaternisant approprié tel que, par exemple, l'iodure de méthyle, l'iodure d'éthyle, le sulfate de diméthyle, le sulfate de diéthyle, le chlorure de benzyle, le phosphate de triméthyle, le p-toluènesulfonate de méthyle.

La solution du copolymère obtenu peut éventuellement être diluée avec le solvant de polymérisation ou avec un autre solvant ou avec un mélange d'un solvant et d'eau. Si on le désire, on peut également isoler le copolymère par élimination du ou des solvants.

Comme substrats susceptibles d'être rendus oléophobes et hydrophobes avec les produits selon l'invention, on peut citer principalement les papiers, les cartons et les matériaux assimilés. On peut citer également d'autres matériaux très divers tels que par exemple les articles tissés ou non tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, le cuir, les matières plastiques, le verre, le bois, les métaux, la porcelaine, la maçonnerie, les surfaces peintes.

Dans le cas des papiers et cartons, les solutions des copolymères selon l'invention sont appliquées principalement en milieu aqueux, mais aussi éventuellement en milieu solvant ou dans un mélange d'eau et de solvants, suivant des techniques connues, par exemple, par enduction, imprégnation, immersion, pulvérisation, brossage, foulardage, couchage.

Sur papier et en solution aqueuse, les produits selon l'invention peuvent être appliqués soit superficiellement sur le support déjà terminé, soit dans la masse, c'est-à-dire dans la pâte à papier ou dans la pulpe.

Les supports ainsi traités présentent de bonnes propriétés oléophobes et hydrophobes après un

simple séchage à température ambiante ou à température plus élevée, suivi éventuellement d'un traitement thermique pouvant aller suivant la nature du support jusque 250 °C.

Pour obtenir une bonne fixation des copolymères selon l'invention sur les substrats sur lesquels ils sont appliqués et pour conférer en plus un effet particulier, il est parfois avantageux de les associer avec certains adjuvants, polymères, produits thermo-condensables et catalyseurs susceptibles de favoriser leur réticulation avec le support. Comme tels, on peut citer les condensats ou précondensats d'urée ou de mélamine formol, la méthylol dihydroxyéthylène urée et ses dérivés, les urones, les méthylol-éthylène-urées, les méthylol-propylène-urées, les méthylol-triazones, les condensats de dicyandiamide-formol, les méthylol-carbamates, les méthylol-acrylamides ou méthacrylamides, leurs polymères ou copolymères, la divinyl sulfone, les polyamides, les dérivés époxy comme le diglycidyl glycérol, les halogénures d'époxypropyl trialkyl (aryl) ammonium comme le chlorure d'(époxy-2,3 propyl) triméthylammonium, le N-méthyl N-(époxy-2,3 propyl) morpholinium chlorure, certains dérivés halogénés comme le chloro-époxy-propane et le dichloro-propanol, ou des composés polaires comme le sel disodique de la trisulfato-oxyéthyl-sulfonium-bétaïne et le sel de pyridinium de l'éther chlorométhylique de l'éthylène glycol.

Pour évaluer les performances des substrats traités selon l'invention, la demanderesse a utilisé les tests suivants :

Test d'ingraissabilité ou « Kit value »

Ce test décrit dans Tappi, vol. 50, n° 10, pages 152A et 153A, norme RC 338 et UM 511, permet de mesurer l'ingraissabilité des substrats par des mélanges d'huile de ricin, de toluène et d'heptane. Ceux-ci contiennent des quantités variables de ces trois produits :

| Nombre Kit (Kit value) | Volume d'huile de ricin | Volume de toluène | Volume d'heptane |
|---|---|---|---|
| 1 | 200 | 0 | 0 |
| 2 | 180 | 10 | 10 |
| 3 | 160 | 20 | 20 |
| 4 | 140 | 30 | 30 |
| 5 | 120 | 40 | 40 |
| 6 | 100 | 50 | 50 |
| 7 | 80 | 60 | 60 |
| 8 | 60 | 70 | 70 |
| 9 | 40 | 80 | 80 |
| 10 | 20 | 90 | 90 |
| 11 | 0 | 100 | 100 |
| 12 | 0 | 90 | 110 |

Le test consiste à déposer doucement sur le papier traité des gouttes de ces mélanges. On laisse les gouttes sur le papier durant 15 secondes, puis on observe soigneusement l'aspect des papiers ou cartons et on note le mouillage ou la pénétration mis en évidence par un brunissement de la surface. Le nombre correspondant au mélange contenant le pourcentage le plus élevé d'heptane, qui ne pénètre pas ou ne mouille pas le papier, est la « kit value » du papier et est considéré comme étant le taux d'oléophobie du papier traité. Plus la « kit value » est élevée, meilleure est l'oléophobie du papier.

Test à l'essence de térébenthine

Ce test est décrit dans Tappi, norme T 454, ts 66 (1966).

Sur le papier à tester, lui-même placé sur un bristol blanc, on dépose 5 g de sable de Fontainebleau lavé aux acides, puis on verse sur le sable 1,1 ml d'essence de térébenthine anhydre et colorée par 0,5 g par litre de Rouge Organol B S. Quand l'essence est finie de verser, on déclenche un chronomètre et déplace le papier toutes les 30 secondes sur le bristol. On note le temps écoulé au moment où le bristol se tache. Au-delà de 30 minutes, on peut admettre que le test n'est plus significatif et que le substrat testé présente d'excellentes performances.

L'essai est effectué sur 7 échantillons du même papier. On note les valeurs trouvées de la plus petite à la plus grande et on considère que la quatrième valeur est la valeur moyenne.

Test mesurant l'effet « barrière aux solvants »

Dans de l'essence de térébenthine anhydre et colorée par 0,5 g/litre de Rouge Organol B S, on immerge de 1 cm dans le sens de la longueur une éprouvette rectangulaire (10 cm × 1 cm) du substrat à tester. Cette immersion se fait dans une cuve cylindrique fermée de 500 ml pendant une durée de 24 heures. On mesure ensuite en $mm^2$ la surface de la tache formée par la montée du liquide coloré sur la portion non immergée du substrat testé.

Test mesurant l'effet « barrière à l'eau »

Dans de l'eau colorée par 0,5 g/litre de RHODAMINE B on immerge de 3 cm dans le sens de la longueur une éprouvette rectangulaire (10 cm × 1 cm) du substrat à tester. Cette immersion se fait dans une cuve cylindrique fermée de 500 ml pendant une durée de 24 heures. On mesure ensuite en $mm^2$ la surface de la tache formée par la montée du liquide coloré sur la portion non immergée du substrat testé.

Test de COBB

Le test de COBB et LOWE (Tappi Standard T 441) codifié par le Comité des Essais du Laboratoire Central de l'Industrie Papetière Suédoise (Projet P.C.A. 13-59) consiste à mesurer le poids (en g) d'eau absorbée pendant une minute par un mètre carré de papier supportant une hauteur d'eau d'un centimètre.

Test d'oléophobie

Sur certains supports, l'oléophobie a été mesurée suivant la méthode décrite dans « AATCC Technical manual », Test Method 118-1972, qui évalue la non-mouillabilité du substrat par une série de liquides huileux dont les tensions superficielles sont de plus en plus faibles (Textil Research Journal, Mai 1969, page 451).

Test d'hydrophobie

Sur certains supports, l'hydrophobie a été mesurée suivant la méthode décrite dans « AATCC Technical Manual », Test Method 22-1971.

Les exemples suivants dans lesquels les parties et les pourcentages s'entendent en poids, sauf mention contraire, illustrent l'invention sans la limiter. Dans les exemples d'application, un taux d'enlevage ou d'exprimage de x % indique le poids de bain (x parties) retenu par 100 parties de substrat.

Exemple 1

Dans un réacteur d'une capacité de 1 000 parties en volume, muni d'un agitateur, d'un réfrigérant à reflux, d'un thermomètre, d'une arrivée d'azote et d'un dispositif de chauffage, on charge 20,4 parties d'acétone, 45 parties d'alcool isopropylique, 8 parties de méthacrylate de diméthylaminoéthyle, 16 parties de N-vinyl-pyrrolidone, 0,8 partie d'azo-2,2' bis-isobutyronitrile et 81,6 parties d'un mélange des monomères polyfluorés de formule :

$$CF_3 - (CF_2)_n - C_2H_4 - SO_2 - \underset{\displaystyle CH_3}{\underset{|}{N}} - C_2H_4 - O - CO - CH = CH_2$$

où n est égal à 3, 5, 7, 9, 11, 13 et 15 dans les rapports en poids moyens et respectifs de 1 : 50 : 31 : 10 : 3 : 1 : 1. On chauffe à 75 °C pendant 15 heures sous atmosphère d'azote, puis ajoute 160 parties d'eau, 250 parties d'alcool isopropylique et 8 parties d'acide acétique. On maintient encore pendant 2 heures à 75 °C, puis on refroidit jusqu'à température ambiante.

On obtient ainsi 563 parties d'une solution ($S_1$) d'un copolymère selon l'invention. Cette solution contient 18,8 % de matières non volatiles et son taux de fluor est de 6,6 %.

Exemple 2

2a) Dans un appareillage identique à celui de l'exemple 1, on charge 19,2 parties d'acétone, 45 parties d'alcool isopropylique, 8 parties de méthacrylate de diméthylaminoéthyle, 21 parties de N-vinyl-pyrrolidone, 0,8 partie d'azo-2,2' bis-isobutyronitrile et 76,8 parties du même mélange de monomères polyfluorés qu'à l'exemple 1. On chauffe à 75 °C pendant 15 heures sous atmosphère d'azote, puis ajoute 160 parties d'eau, 250 parties d'alcool isopropylique et 8 parties d'acide acétique. On maintient encore pendant 2 heures à 75 °C, puis on refroidit jusqu'à température ambiante. On obtient ainsi 585 parties

d'une solution ($S_2$) d'un copolymère selon l'invention. Cette solution contient 18,2 % de matières non volatiles et son taux de fluor est de 6 %.

2b) Ce copolymère et celui obtenu à l'exemple 1 sont testés à taux de fluor égal, comparativement aux produits suivants :

A. Copolymère à base de 85 % du mélange de monomères polyfluorés tel que défini à l'exemple 1 et 15 % de méthacrylate de diméthylaminoéthyle, salifié et N-oxydé, préparé suivant l'exemple 1 du brevet US 4 147 851.

B. Copolymère à base de 70 % du mélange de monomères polyfluorés tel que défini à l'exemple 1 et 30 % de méthacrylate de diméthylaminoéthyle, salifié et N-oxydé, préparé suivant l'exemple 2 du brevet US 4 147 851.

C. Phosphate d'alcool polyfluoré de formule :

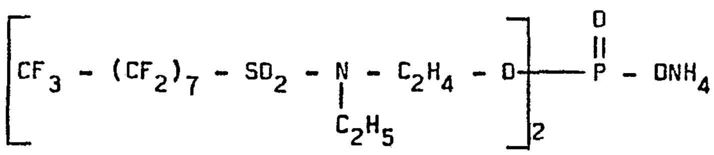

décrit à l'exemple 5 du brevet français 1 317 427.

On applique ces produits sur un papier non collé dont les caractéristiques sont les suivantes :

— Composition fibreuse :
  60 % de pâte KRAFT blanchie à base de feuillus
  40 % de pâte KRAFT blanchie à base de résineux
— Raffinage à l'hydrafineur 00 jusqu'à 35° SR
— Adjuvants introduits :
  talc : 15 %
  agent de rétention (RETAMINOL E de la Société BAYER) : 3 %
— Poids du papier : 70 à 71 g/m²
— Humidité du papier : 4 à 5 %.

A cet effet on prépare cinq bains pour size-press, contenant chacun 0,7 g de fluor par litre et ayant la composition suivante (en g/litre) :

| Constituants du bain (g/l) | N° 1 | N° 2 | N° 3 | N° 4 | N° 5 |
|---|---|---|---|---|---|
| • Solution $S_1$ de l'exemple 1 | 10,6 | | | | |
| • Solution $S_2$ de l'exemple 2 | | 11,6 | | | |
| • Solution du copolymère A à 16,6 % de matières non volatiles et à 6,5 % de fluor | | | 10,8 | | |
| • Solution du copolymère B à 15,3 % de matières non volatiles et à 4,9 % de fluor | | | | 14,4 | |
| • Solution du composé C à 35,7 % de matières non volatiles et 18,8 % de fluor | | | | | 3,8 |
| • Eau | 989,4 | 988,4 | 989,2 | 985,6 | 996,2 |
| Total | 1 000 | 1 000 | 1 000 | 1 000 | 1 000 |

Cinq feuilles de papier non collé sont traitées en size-press respectivement dans ces cinq bains avec un taux d'enlevage de 85 %. Après séchage de 90 secondes à 110 °C, on obtient des papiers présentant un caractère anti-graisse, un effet « barrière à l'eau » et un effet « barrière aux solvants » plus ou moins forts. Leurs caractéristiques sont regroupées dans le tableau suivant, comparativement à celles d'un papier non traité.

| Caractéristiques | Papier traité avec le bain | | | | | Papier non traité |
|---|---|---|---|---|---|---|
| | N° 1 | N° 2 | N° 3 | N° 4 | N° 5 | |
| Oléophobie (Kit-value) | 10 | 9 | 9 | 5 | 9 | 0 |
| Test à l'essence de térébenthine (en minutes ou en secondes) | supérieur à 30 min. | supérieur à 30 min. | 10 min. | inférieur à 30 s. | supérieur à 30 min. | inférieur à 30 s. |
| Effet "barrière à l'eau", surface de la tache (en mm2) | 36 | 50 | 207 | 477 | supérieur à 700 | supérieur à 700 |
| Effet "barrière aux solvants", surface de la tache (en mm2) | 0 | 30 | 140 | 780 | 155 | supérieur à 900 |

L'examen des résultats de ce tableau montre que les papiers traités avec les copolymères selon l'invention (bains Nos. 1 et 2) possèdent non seulement un excellent caractère anti-graisse, mais présentent aussi des effets « barrière à l'eau » et « barrière aux solvants » remarquables.

2c) On prépare cinq bains pour size-press, contenant chacun 1 g de fluor par litre et ayant la composition suivante (en g/litre) :

| Constituants du bain (g/l) | N° 6 | N° 7 | N° 8 | N° 9 | N° 10 |
|---|---|---|---|---|---|
| . Solution $S_1$ de l'exemple 1 | 15,1 | | | | |
| . Solution $S_2$ de l'exemple 2 | | 16,6 | | | |
| . Solution du copolymère A à 16,6 % de matières non volatiles et à 6,5 % de fluor | | | 15,4 | | |
| . Solution du copolymère B à 15,3 % de matières non volatiles et à 4,9 % de fluor | | | | 20,4 | |
| . Solution du composé C à 35,7 % de matières non volatiles et à 18,8 % de fluor | | | | | 5,3 |
| . Eau | 984,9 | 983,4 | 984,6 | 979,6 | 994,7 |
| | 1 000 | 1 000 | 1 000 | 1 000 | 1 000 |

Cinq feuilles de papier AFNOR VII non collé pesant 77 g/m² sont traitées en size-press respectivement avec ces cinq bains avec un taux d'enlevage de 95 %. Après séchage pendant 90 secondes à 110 °C, les papiers ainsi traités et un papier non traité sont soumis au test COBB.

Les résultats sont regroupés dans le tableau suivant :

| | Papier traité avec le bain | | | | | Papier non traité |
|---|---|---|---|---|---|---|
| | N° 6 | N° 7 | N° 8 | N° 9 | N° 10 | |
| Valeur COBB | 20 | 20 | 30 | 30 | 160 | 160 |

L'examen du tableau montre que les papiers traités avec les copolymères selon l'invention (bains Nos 6 et 7) possèdent un excellent degré de collage.

Exemple 3

Dans un appareillage identique à celui de l'exemple 1, on charge 25 parties d'acétone, 45 parties d'alcool isopropylique, 12 parties de méthacrylate de diméthylaminoéthyle, 3 parties de N-vinylpyrrolidone, 0,4 partie d'azo-2,2' bis-isobutyronitrile et 100 parties du même mélange de monomères polyfluorés qu'à l'exemple 1. On chauffe à 75 °C pendant 17 heures sous atmosphère d'azote, puis ajoute 165 parties d'eau, 250 parties d'alcool isopropylique et 8 parties d'acide acétique. On maintient encore pendant 2 heures à 75 °C, puis on refroidit jusqu'à température ambiante. On obtient ainsi 589 parties d'une solution ($S_3$) d'un copolymère selon l'invention. Cette solution contient 19,1 % de matières non volatiles et son taux de fluor est de 7,8 %.

Appliqué sur le même papier et dans les mêmes conditions et proportions qu'à l'exemple 2b (soit 9 g de solution $S_3$ par litre de bain), ce copolymère confère au papier les caractéristiques suivantes :

| | |
|---|---|
| — Oléophobie (kit-value) | 9 |
| — Test à l'essence de térébenthine | supérieur à 30 minutes |
| — Effet « barrière à l'eau » Surface de la tache | 40 mm$^2$ |
| — Effet « barrière aux solvants » Surface de la tache | 10 mm$^2$ |

Exemple 4

Dans un appareillage identique à celui de l'exemple 1, on charge 20,5 parties d'acétone, 45 parties d'alcool isopropylique, 13 parties de méthacrylate de diméthylaminoéthyle, 5 parties de N-vinylpyrrolidone, 0,8 partie d'acide azo-4,4' bis-(cyano pentanoïque) et 82 parties du même mélange de monomères polyfluorés qu'à l'exemple 1. On chauffe à 75 °C pendant 4 heures sous atmosphère d'azote, puis ajoute 160 parties d'eau, 250 parties d'alcool isopropylique et 10 parties d'acide acétique. On maintient encore pendant 2 heures à 75 °C, puis on refroidit jusqu'à température ambiante. On obtient ainsi 580 parties d'une solution ($S_4$) d'un copolymère selon l'invention. Cette solution contient 17,2 % de matières non volatiles et son taux de fluor est de 6,5 %.

Appliqué sur le même papier et dans les mêmes conditions et proportions qu'à l'exemple 2b (soit 10,8 g de solution $S_4$ par litre de bain), ce copolymère confère au papier les caractéristiques suivantes :

| | |
|---|---|
| — Oléophobie (kit-value) | 9 |
| — Test à l'essence de térébenthine | supérieur à 30 minutes |

Exemple 5

Dans un appareillage identique à celui de l'exemple 1, on charge 21,4 parties d'acétone, 46 parties d'alcool isopropylique, 10 parties de méthacrylate de diméthylaminoéthyle, 10 parties de N-vinylpyrrolidone, 0,8 partie d'azo-2,2' bis-isobutyronitrile et 85,6 parties du même mélange de monomères polyfluorés qu'à l'exemple 1. On chauffe à 70 °C pendant 22 heures sous atmosphère d'azote, puis ajoute 160 parties d'eau, 250 parties d'alcool isopropylique et 10 parties d'acide acétique. On maintient encore pendant une heure à 70 °C, puis on refroidit jusqu'à température ambiante. On obtient ainsi 530 parties d'une solution ($S_5$) d'un copolymère selon l'invention. Cette solution contient 19,1 % de matières non volatiles et son taux de fluor est de 7,1 %.

En mélangeant 0,42 g de la solution $S_5$, 4 g d'une pâte « bisulfite blanchie » sèche et 156 g d'eau, on prépare une pâte aqueuse contenant 0,03 g de fluor. Cette pâte est ensuite diluée avec 4 litres d'eau dans le bol d'une machine « Rapid-Kotten ». On agite pendant 30 secondes, puis on filtre sous vide. La formette de papier ainsi obtenue est séchée sous vide pendant 10 minutes à 90 °C sur les plaques de la machine « Rapid-Kotten ». On obtient finalement une feuille de papier traitée dans la masse dont les caractéristiques figurent dans le tableau suivant, comparativement à celles d'une feuille témoin non traitée.

(Voir tableau p. 11)

| | Formette traitée | Formette témoin |
|---|---|---|
| Oléophobie (kit-value) | 10 | 0 |
| Test à l'essence de térébenthine | supérieur à 30 minutes | inférieur à 30 secondes |
| Effet "barrière à l'eau" Surface de la tache (en $mm^2$) | 65 | supérieur à 700 |
| Effet "barrière aux solvants" Surface de la tache (en $mm^2$) | 0 | supérieur à 900 |
| Valeur COBB | 29 | 168 |

Exemple 6

On prépare un bain de foulardage composé de 40 parties de la solution $S_1$ selon l'exemple 1, 40 parties d'une solution aqueuse à 65 % d'un précondensat d'éther triméthylique d'hexaméthylolmélamine, 4 parties d'acide lactique et 916 parties d'eau. Trois tissus de composition différente : un tissu de fibres acryliques (DRALON), un tissu de fibres polyester (TERGAL) et un tissu mixte de polyester-coton 66/33, sont foulardés dans ce bain avec des taux d'exprimage respectifs de 112 %, 87 % et 70 %. Les tissus sont ensuite traités pendant 3 minutes à 165 °C dans un thermocondenseur BENZ.

Les caractéristiques des tissus ainsi traités (T) sont indiquées dans le tableau suivant, comparativement à celles des tissus témoins non traités (NT).

| Caractéristiques | tissu de DRALON | | tissu de TERGAL | | tissu de polyester/coton | |
|---|---|---|---|---|---|---|
| | T | NT | T | NT | T | NT |
| Hydrophobie (Spray test) Norme AATCC 22 - 1971 | 100 | 0 | 90 | 50 | 70 | 0 |
| Oléophobie Norme AATCC 118 - 1972 | 6 | 0 | 5 | 0 | 5 | 0 |

L'examen des résultats du tableau ci-dessus montre que les tissus apprêtés avec les copolymères selon l'invention possèdent un caractère anti-tache, c'est-à-dire sont susceptibles de résister aux taches maigres et grasses.

Exemple 7

Sur deux cuirs différents, on applique à la brosse 100 g/$m^2$ de la solution $S_2$ selon l'exemple 2a et on laisse sécher pendant 24 heures à température ambiante. On obtient des cuirs présentant de remarquables propriétés oléophobes et hydrophobes comme le montrent les caractéristiques indiquées dans le tableau suivant.

| Caractéristiques | BASANE (tannage végétal) | | Chèvre blanche (tannage au chrome) | |
|---|---|---|---|---|
| | traité | non traité | traité | non traité |
| Hydrophobie (Spray test) Norme AATCC 22 - 1971 | 100 | 0 | 100 | 0 |
| Oléophobie Norme AATCC 118 - 1972 | 8 | 0 | 8 | 0 |

Exemple 8

Dans un appareillage identique à celui de l'exemple 1, on charge 21,4 parties d'acétone, 90 parties d'alcool isopropylique, 8 parties de méthacrylate de diméthylaminoéthyle, 12 parties de N-vinyl-pyrrolidone, 0,8 partie d'acide azo-4,4' bis-(cyano-4 pentanoïque) et 85,6 parties du monomère polyfluoré de formule :

$$C_6F_{13} - C_2H_4 - SO_2 - \underset{\displaystyle CH_3}{\underset{|}{N}} - C_2H_4 - O - CO - CH = CH_2$$

On chauffe à 70 °C pendant 10 heures sous atmosphère d'azote, puis ajoute 160 parties d'eau, 205 parties d'alcool isopropylique et 5 parties d'acide acétique. On maintient encore pendant deux heures à 70 °C, puis on refroidit jusqu'à température ambiante. On obtient ainsi 580 parties d'une solution ($S_6$) d'un copolymère selon l'invention. Cette solution contient 17,6 % de matières non volatiles et son taux de fluor est de 6,5 %.

Appliqué sur le même papier et dans les mêmes conditions et proportions qu'à l'exemple 2b (soit 10,8 g de solution $S_6$ par litre de bain), ce copolymère confère au papier les caractéristiques suivantes :

— Oléophobie (kit-value) 9
— Test à l'essence de térébenthine supérieur à 30 minutes

Exemple 9

A l'aide d'un pinceau, on enduit une planche de bois de chêne avec 100 g/m² de la solution $S_5$ décrite à l'exemple 5 et on laisse sécher pendant 24 heures à température ambiante.

L'effet hydrophobe du support ainsi traité est mesuré en déposant à la surface du bois quelques gouttes de chacune des 7 solutions suivantes :

| Cotation de l'effet hydrophobe | Composition des solutions-test (en %) |
|---|---|
| 7 | 100 propanol-2 |
| 6 | 50/50 propanol-2/eau |
| 5 | 30/70 propanol-2/eau |
| 4 | 20/80 propanol-2/eau |
| 3 | 10/90 propanol-2/eau |
| 2 | 5/95 propanol-2/eau |
| 1 | 2/98 propanol-2/eau |

La cotation correspond au numéro de la solution la plus riche en alcool isopropylique qui ne mouille

pas le support. Ce mouillage est mis en évidence par une pénétration totale du liquide ou par un brunissement de la surface en contact avec le liquide.

L'effet oléophobe est mesuré en utilisant les solutions de la norme AATCC 118-1972. On dépose à la surface du bois quelques gouttes de chacune des solutions. La cotation correspond au numéro de la solution de tension superficielle la plus basse, qui ne pénètre pas dans le support ou pour laquelle on n'observe aucun brunissement de la surface en contact avec le liquide.

Comparativement à un bois non traité, les caractéristiques sont les suivantes :

| | Bois traité | Bois non traité |
|---|---|---|
| Hydrophobie | 6 | 0 |
| Oléophobie | 6 | 0 |

Exemple 10

Dans un appareillage identique à celui de l'exemple 1, on charge 14,2 parties d'acétone, 45 parties d'alcool isopropylique, 3 parties de méthacrylate de diméthylaminoéthyle, 40 parties de N-vinyl-pyrrolidone, 0,8 partie d'acide azo-4,4' bis-(cyano-4 pentanoïque) et 56,8 parties du même mélange de monomères polyfluorés qu'à l'exemple 1. On chauffe à 80 °C pendant 4 heures sous atmosphère d'azote, puis on ajoute 160 parties d'eau, 160 parties d'alcool isopropylique et 2 parties d'acide acétique. On maintient encore pendant une heure à 80 °C, puis on refroidit jusqu'à température ambiante. On obtient ainsi 460 parties d'une solution ($S_7$) d'un copolymère selon l'invention. Cette solution contient 21,2 % de matières non volatiles et son taux de fluor est de 5,5 %.

Appliqué sur le même papier et dans les mêmes conditions qu'à l'exemple 2b, mais à raison de 0,8 g de fluor par litre de bain (soit 14,5 g de solution $S_7$ par litre de bain), ce copolymère confère au papier les caractéristiques suivantes :

— Oléophobie (kit-value) 9
— Test à l'essence de térébenthine supérieur à 30 minutes

Exemple 11

Dans un appareillage identique à celui de l'exemple 1, on charge 45 parties d'alcool isopropylique, 4 parties de méthacrylate de diméthylaminoéthyle, 6 parties de N-vinyl-pyrrolidone, 0,4 partie d'acide azo-4,4' bis-(cyano-4 pentanoïque) et 40 parties du monomère polyfluoré de formule :

$$C_8F_{17}—C_2H_4—O—CO—CH=CH_2$$

On chauffe à 70 °C pendant 24 heures sous atmosphère d'azote, puis ajoute 80 parties d'eau, 100 parties d'alcool isopropylique et 2 parties d'acide acétique. On maintient encore une heure à 80 °C puis on refroidit jusqu'à température ambiante. On obtient ainsi 275 parties d'une solution ($S_8$) d'un copolymère selon l'invention. Cette solution contient 17,8 % de matières non volatiles et son taux de fluor est de 8,8 %.

Dans un bain de foulardage composé de 10 parties de la solution ($S_8$) et 990 parties d'eau, on foularde un non-tissé (voie sèche) de polyester pesant 200 g/m² avec un taux d'exprimage de 250 %, puis on sèche pendant 3 minutes à 165 °C dans un thermocondenseur BENZ.

Les caractéristiques du non-tissé ainsi traité sont indiquées dans le tableau suivant, comparativement à un non-tissé témoin non traité.

(Voir tableau p. 14)

| | Non-tissé Polyester | |
|---|---|---|
| | traité | non traité |
| Hydrophobie mesurée comme indiqué à l'exemple 9 | 5 | 2 |
| Oléophobie Norme AATCC 118 - 1972 | 6 | 0 |
| Effet "barrière à l'eau" (Surface de la tache en $mm^2$) | 0 | 70 |
| Effet "barrière aux solvants" (Surface de la tache en $mm^2$) | 20 | 250 |

Exemple 12

Dans un appareillage identique à celui de l'exemple 1, on charge 21,3 parties d'acétone, 45 parties d'alcool isopropylique, 14 parties de méthacrylate de diméthylaminoéthyle, 1 partie de N-vinyl-pyrrolidone, 0,8 partie d'acide azo-4,4' bis-(cyano-4 pentanoïque) et 85 parties du monomère polyfluoré de formule :

$$C_6F_{13} - C_2H_4 - SO_2 - \underset{\substack{|\\ CH_3}}{N} - C_2H_4 - O - CO - CH = CH_2$$

On chauffe à 70 °C pendant 6 heures sous atmosphère d'azote puis 160 parties d'eau, 160 parties d'alcool isopropylique et 8 parties d'acide acétique. On maintient encore pendant une heure à 70 °C, puis on refroidit jusqu'à température ambiante. On obtient ainsi 490 parties d'une solution ($S_9$) d'un copolymère selon l'invention. Cette solution contient 20 % de matières non volatiles et son taux de fluor est de 7,8 %.

Dans un bain de foulardage composé de 10 parties de solution $S_9$ et 990 parties d'eau, on foularde un non-tissé cellulosique (voie humide) pesant 46 g/$m^2$, avec un taux d'exprimage de 150 %, puis on sèche pendant 3 minutes à 165 °C dans un thermocondenseur BENZ.

Les caractéristiques du non-tissé ainsi traité sont indiquées dans le tableau suivant, comparativement à un non-tissé témoin non traité.

| | Non-tissé cellulosique | |
|---|---|---|
| | traité | non traité |
| Oléophobie (kit-value) | 9 | 0 |
| Test à l'essence de térébenthine | supérieur à 30 minutes | inférieur à 30 secondes |
| Effet "barrière à l'eau" (surface de la tache en $mm^2$) | 10 | supérieur à 700 |
| Effet "barrière aux solvants" (surface de la tache en $mm^2$) | 0 | supérieur à 900 |

Exemple 13

Dans un appareillage identique à celui de l'exemple 1, on charge 20,4 parties d'acétone, 45 parties d'alcool isopropylique, 6 parties de méthacrylate de diméthylaminoéthyle, 16 parties de N-vinyl-pyrrolidone, 2 parties de monométhacrylate d'éthylène glycol, 0,8 partie d'acide azo-4,4' bis-(cyano-4 pentanoïque) et 81,6 parties du même mélange de monomères polyfluorés qu'à l'exemple 1. On chauffe à 80 °C pendant 4 heures sous atmosphère d'azote, puis ajoute 160 parties d'eau, 250 parties d'alcool isopropylique et 6 parties d'acide acétique. On maintient encore pendant 2 heures à 80 °C, puis on refroidit jusqu'à température ambiante. On obtient ainsi 583 parties d'une solution ($S_{10}$) d'un copolymère selon l'invention. Cette solution contient 18,1 % de matières non volatiles et son taux de fluor est de 6,4 %.

Appliqué sur le même papier et dans les mêmes conditions et proportions qu'à l'exemple 2b (soit 11 g de solution $S_{10}$ par litre de bain), ce copolymère confère au papier les caractéristiques suivantes :

— Oléophobie (kit-value) 9
— Test à l'essence de térébenthine supérieur à 30 minutes

Exemple 14

Dans un appareillage identique à celui de l'exemple 1, on charge 18,4 parties d'acétone, 50 parties d'alcool isopropylique, 8 parties de méthacrylate de tert-butylaminoéthyle, 16 parties de N-vinyl-pyrrolidone, 0,8 partie d'acide azo-4,4' bis-(cyano-4 pentanoïque) et 73,6 parties du même mélange de monomères polyfluorés qu'à l'exemple 1. On chauffe à 80 °C pendant 6 heures sous atmosphère d'azote, puis ajoute 160 parties d'eau, 250 parties d'alcool isopropylique et 4 parties d'acide acétique. On maintient encore pendant une heure à 80 °C, puis on refroidit jusqu'à température ambiante. On obtient ainsi 560 parties d'une solution ($S_{11}$) d'un copolymère selon l'invention. Cette solution contient 17,3 % de matières non volatiles et son taux de fluor est de 6 %.

Appliqué sur le même papier et dans les mêmes conditions qu'à l'exemple 2b (soit 11,6 g de solution $S_{11}$ par litre de bain), ce copolymère confère au papier les caractéristiques suivantes :

— Oléophobie (kit-value) 9
— Test à l'essence de térébenthine supérieur à 30 minutes

Exemple 15

Dans un appareillage identique à celui de l'exemple 1, on charge 18,7 parties d'acétone, 50 parties d'alcool isopropylique, 12 parties de méthacrylate de diméthylaminoéthyle, 10 parties de N-vinyl-pyrrolidone, 6 parties d'acétate de vinyle, 0,8 partie d'acide azo-4,4' bis-(cyano-4 pentanoïque) et 74,7 parties du même mélange de monomères polyfluorés qu'à l'exemple 1. On chauffe à 80 °C pendant 6 heures sous atmosphère d'azote, puis ajoute 160 parties d'eau, 250 parties d'alcool isopropylique et 12 parties d'acide acétique. On maintient encore à 80 °C pendant une heure, puis on refroidit jusqu'à température ambiante. On obtient ainsi 572 parties d'une solution ($S_{12}$) d'un copolymère selon l'invention. Cette solution contient 17,6 % de matières non volatiles et son taux de fluor est de 5,9 %.

Appliqué sur le même papier et dans les mêmes conditions qu'à l'exemple 2b (soit 11,8 g de solution $S_{12}$ par litre de bain), ce copolymère confère au papier les caractéristiques suivantes :

— Oléophobie (kit-value) 9
— Test à l'essence de térébenthine supérieur à 30 minutes

**Revendications**

1. Copolymères fluorés, éventuellement salifiés ou quaternisés, caractérisés en ce qu'ils comprennent :

a) 35 à 98 % en poids d'un ou plusieurs monomères polyfluorés de formule générale :

$$Rf - B - Q - \overset{\overset{O}{\|}}{C} - \overset{\overset{R}{|}}{C} = CH - R \qquad (I)$$

dans laquelle Rf représente un radical perfluoro-alkyle à chaîne droite ou ramifiés, contenant 2 à 20 atomes de carbone, Q représente un atome d'oxygène ou de soufre, B représente un enchaînement bivalent lié à Q par un carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;

b) 1 à 15 % en poids d'un ou plusieurs monomères de formule générale :

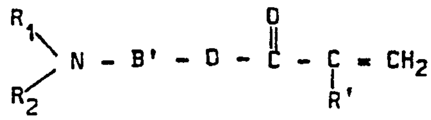 (II)

dans laquelle B' représente un radical alkylène linéaire ou ramifié, contenant 1 à 4 atomes de carbone, R' représente un atome d'hydrogène ou un radical alkyle contenant 1 à 4 atomes de carbone, $R_1$ représente un radical alkyle contenant 1 à 18 atomes de carbone, hydroxyéthyle ou benzyle, $R_2$ représente un atome d'hydrogène ou un radical alkyle contenant 1 à 18 atomes de carbone, hydroxyéthyle ou benzyle ou $R_1$ et $R_2$ ensemble avec l'atome d'azote forment un radical morpholino, pipéridino ou pyrrolidinyle-1 ;

c) 1 à 50 % en poids d'un ou plusieurs monomères de formule générale :

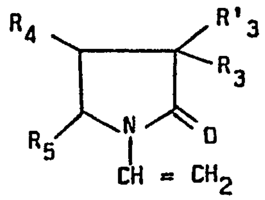 (III)

dans laquelle $R_3$, $R'_3$, $R_4$ et $R_5$ sont identiques ou différents et représentent chacun un atome d'hydrogène ou un radical alkyle contenant 1 à 4 atomes de carbone ; et éventuellement

d) jusqu'à 10 % en poids d'un monomère quelconque autre que les monomères de formules (I), (II) et (III).

2. Copolymères selon la revendication 1, comprenant 69 à 93 % en poids de monomère(s) polyfluoré(s) de formule (I), 5 à 11 % en poids de monomère(s) de formule (II), 2 à 20 % en poids de monomère(s) de formule (III), et 0 à 5 % en poids d'un autre monomère.

3. Copolymères selon la revendication 2, comprenant 7 à 10 % de monomère(s) de formule (II).

4. Copolymères selon l'une des revendications 1 à 3, dans lesquels le ou les monomère(s) polyfluoré(s) répond(ent) à la formule :

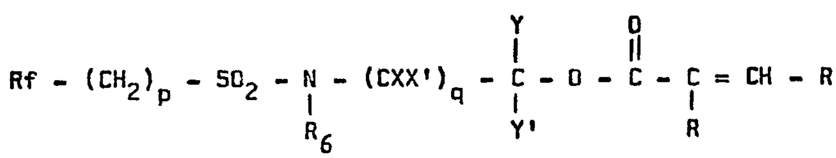 (IV)

dans laquelle Rf et R ont les mêmes significations que dans la revendication 1, p représente un nombre entier allant de 1 à 20, de préférence égal à 2 ou 4, q représente un nombre entier allant de 1 à 4, de préférence égal à 1 ou 2, $R_6$ représente un atome d'hydrogène ou un radical alkyle contenant 1 à 10 atomes de carbone, cycloalkyle contenant 5 à 12 atomes de carbone, hydroxyalkyle contenant 2 à 4 atomes de carbone ou aryle éventuellement substitué par un radical alkyle contenant 1 à 6 atomes de carbone, X, X', Y et Y' sont identiques ou différents et représentent chacun un atome d'hydrogène ou un radical alkyle contenant 1 à 4 atomes de carbone.

5. Copolymères selon la revendication 4, obtenus à partir d'un mélange de monomères de formule (IV) présentant des radicaux Rf différents.

6. Copolymères selon l'une des revendications 1 à 5, dans lesquels le monomère de formule (II) est le méthacrylate de diméthylaminoéthyle.

7. Copolymères selon l'une des revendications 1 à 6, dans lesquels le monomère de formule (III) est la N-vinyl-pyrrolidone-2.

8. L'application des copolymères selon l'une des revendications 1 à 7 à l'oléofugation et à l'hydrofugation de substrats divers, en particulier des papiers, cartons et articles similaires.

9. Les matériaux et articles traités au moyen d'un copolymère selon l'une des revendications 1 à 7.

**Claims**

1. Fluorinated copolymers, if necessary salified or quaternised, characterised by the fact that they comprise :

a) 35 to 98 % by weight of one or more polyfluorinated monomers of general formula :

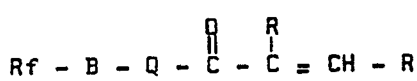 (I)

in which Rf represents a perfluoro-alkyl radical with straight of branched chain, containing 2 to 20 carbon atoms, Q represents an atom of oxygen or sulphur, B represents a bivalent linkage connected to Q by a carbon and capable of including one or more atoms of oxygen, sulphur and/or nitrogen, one of the symbols R represents an atom of hydrogen and the other an atom of hydrogen or an alkyl radical containing 1 to 4 carbon atoms ;

b) 1 to 15 % by weight of one or more monomers of general formula :

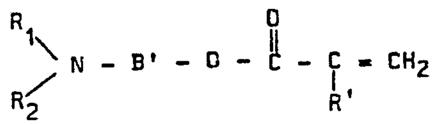

(II)

in which B′ represents a linear or branched alkylene radical containing 1 to 4 carbon atoms, R′ represents an atom of hydrogen or an alkyl radical containing 1 to 4 carbon atoms, $R_1$ represents an alkyl radical containing 1 to 18 carbon atoms, hydroxyethyl or benzyl, $R_2$ represents an atom of hydrogen or an alkyl radical containing 1 to 18 carbon atoms, hydroxyethyl or benzyl, or $R_1$ and $R_2$ together with the nitrogen atom form a morpholino, piperidino or 1-pyrrolidinyl radical ;

c) 1 to 50 % by weight of one or more monomers of general formula :

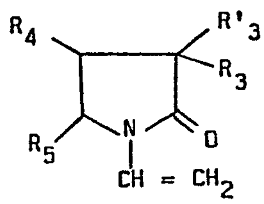

(III)

in which $R_3$, $R'_3$, $R_4$ and $R_5$ are identical or different and each represents an atom of hydrogen or an alkyl radical containing 1 to 4 carbon atoms ; and as appropriate

d) up to 10 % by weight of a monomer which is any other than the monomers of formulae (I), (II), and (III).

2. Copolymers according to Claim 1, comprising 69 to 93 % by weight of polyfluorinated monomer(s) of formula (I), 5 to 11 % by weight of monomer(s) of formula (II), 2 to 20 % by weight of monomer(s) of formula (III) and 0 to 5 % by weight of another monomer.

3. Copolymers according to claim 2, comprising 7 to 10 % of monomer(s) of formula (II).

4. Copolymers according to one of the claims 1 to 3, in which the polyfluorinated monomer or monomers correspond(s) to the formula :

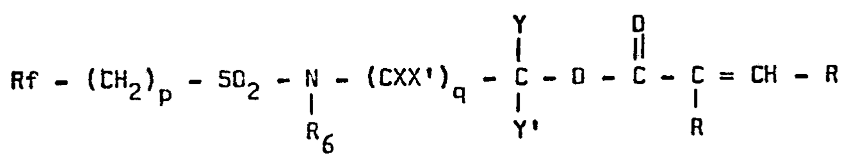

(IV)

in which Rf and R have the same significance as in Claim 1, p represents a whole number between 1 and 20, preferably equal to 2 or 4, q represents a whole number between 1 and 4, preferably equal to 1 or 2, $R_6$ represents an atom of hydrogen or an alkyl radical containing 1 to 10 carbon atoms, a cycloalkyl radical containing 5 to 12 carbon atoms, a hydroxyalkyl radical containing 2 to 4 carbon atoms, or an aryl radical, substituted as appropriate by an alkyl radical containing 1 to 6 carbon atoms, X, X′, Y and Y′ are identical or different and each represents an atom of hydrogen or an alkyl radical containing 1 to 4 carbon atoms.

5. Copolymers according to Claim 4, obtained from a mixture of monomers of formula (IV) which have different Rf radicals.

6. Copolymers according to one of the claims 1 to 5, in which the monomer of formula (II) is dimethylaminoethyl methacrylate.

7. Copolymers according to one of the claims 1 to 6, in which the monomer of formula (III) is N-vinyl 2-pyrrolidone.

8. The application of the copolymers according to one of the claims 1 to 7, for the oil-proofing and water-proofing of various substrates, in particular, papers, cartons and similar articles.

9. The materials and articles treated by means of a copolymer according to one of the claims 1 to 7.

**Ansprüche**

1. Gegebenenfalls in ein Salz überführte oder quaternisierte fluorierte Copolymere, dadurch gekennzeichnet, daß sie enthalten :

a) 35 bis 98 Gew.% eines oder mehrerer polyfluorierter Monomerer der allgemeinen Formel

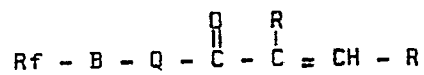

(I)

worin Rf einen geradkettigen oder verzweigten Perfluoralkylrest mit 2 bis 20 Kohlenstoffatomen, Q ein Sauerstoff- oder Schwefelatom, B eine über ein Kohlenstoffatom an Q gebundene bivalente Kette, die ein oder mehr Sauerstoff-, Schwefel- und/oder Stickstoffatome aufweisen kann, einer der Reste R ein Wasserstoffatom und der andere ein Wasserstoffatom oder einen Alkylrest mit 1 bis 4 Kohlenstoffatomen bedeuten ;

b) 1 bis 15 Gew.% eines oder mehrerer Monomerer der allgemeinen Formel :

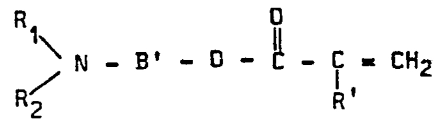

(II)

worin B' einen linearen oder verzweigten Alkylenrest mit 1 bis 4 Kohlenstoffatomen, R' ein Wasserstoffatom oder einen Alkylrest mit 1 bis 4 Kohlenstoffatomen, $R_1$ einen Alkylrest mit 1 bis 18 Kohlenstoffatomen, einen Hydroxyäthyl- oder Benzylrest, $R_2$ ein Wasserstoffatom oder einen Alkylrest mit 1 bis 18 Kohlenstoffatomen, einen Hydroxyäthyl- oder Benzylrest bedeuten oder worin $R_1$ und $R_2$ gemeinsam zusammen mit dem Stickstoffatom einen Morpholino-, Piperidino- oder 1-Pyrrolidinyl-Rest darstellen ;

c) 1 bis 50 Gew.% eines oder mehrerer Monomerer der allgemeinen Formel

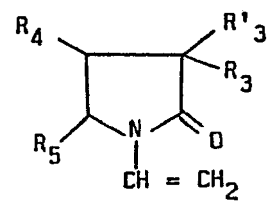

(III)

worin $R_3$, $R'_3$, $R_4$ und $R_5$ gleich oder verschieden sind und jeweils ein Wasserstoffatom oder einen Alkylrest mit 1 bis 4 Kohlenstoffatomen bedeuten ; und gegebenenfalls

d) bis zu 10 Gew.% eines beliebigen, von den Monomeren der Formeln (I), (II) und (III) verschiedenen Monomeren.

2. Copolymere nach Anspruch 1, die enthalten 69 bis 93 Gew.% eines oder mehrerer polyfluorierter Monomerer der Formel (I) ; 5 bis 11 Gew.% eines oder mehrerer Monomerer der Formel (II) ; 2 bis 20 Gew.% eines oder mehrerer Monomerer der Formel (III) ; und 0 bis 5 Gew.% eines anderen Monomeren.

3. Copolymere nach Anspruch 2, die 7 bis 10 % eines oder mehrerer Monomerer der Formel (II) enthalten.

4. Copolymere nach einem der Ansprüche 1 bis 3, worin das oder die polyfluorierten Monomeren der Formel entsprechen :

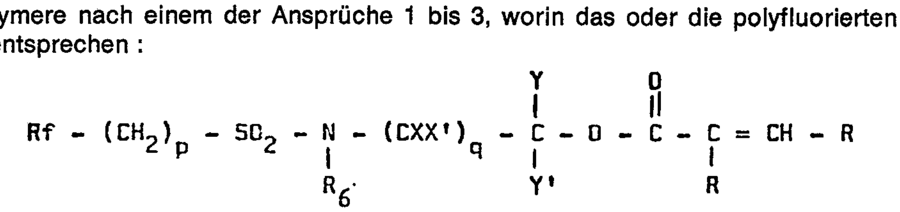

(IV)

worin Rf und R die in Anspruch 1 angegebenen Bedeutungen haben, p eine ganze Zahl von 1 bis 20, vorzugsweise die Zahl 2 oder 4, q eine ganze Zahl von 1 bis 4, vorzugsweise die Zahl 1 oder 2, $R_6$ ein Wasserstoffatom oder einen Alkylrest mit 1 bis 10 Kohlenstoffatomen, einen Cycloalkylrest mit 5 bis 12 Kohlenstoffatomen, einen Hydroxyalkylrest mit 2 bis 4 Kohlenstoffatomen oder einen Arylrest, gegebenenfalls substituiert durch einen Alkylrest mit 1 bis 6 Kohlenstoffatomen, X, X', Y und Y', die gleich oder verschieden sind, jeweils ein Wasserstoffatom oder einen Alkylrest mit 1 bis 4 Kohlenstoffatomen bedeuten.

5. Copolymere nach Anspruch 4, hergestellt aus einer Mischung aus Monomeren der Formel (IV), die verschiedene Reste Rf aufweisen.

6. Copolymere nach einem der Ansprüche 1 bis 5, worin das Monomere der Formel (II) Dimethylaminoäthylmethacrylat ist.

7. Copolymere nach einem der Ansprüche 1 bis 6, worin das Monomere der Formel (III) N-Vinyl-2-pyrrolidon ist.

8. Verwendung der Copolymeren nach einem der Ansprüche 1 bis 7, um verschiedene Substrate, insbesondere Papiere, Kartons und ähnliche Artikel, ölabstoßend und wasserabstoßend zu machen.

9. Materialien und Artikel, die mit einem Copolymeren nach einem der Ansprüche 1 bis 7 behandelt worden sind.